# EUROPÄISCHE PATENTSCHRIFT

(11) **EP 1 917 171 B1**
(45) Veröffentlichungstag und Bekanntmachung des Hinweises auf die Patenterteilung: **14.08.2013**
(21) Anmeldenummer: 06763639.9
(22) Anmeldetag: 12.06.2006
(51) Int. Cl.: B60W 20/00, B60W 30/00

(54) **VERFAHREN ZUR ANSTEUERUNG EINES HYBRIDFAHRZEUGS UND HYBRIDFAHRZEUG**
METHOD FOR TRIGGERING A HYBRID VEHICLE, AND HYBRID VEHICLE
PROCEDE POUR PILOTER UN VEHICULE HYBRIDE ET VEHICULE HYBRIDE

(30) Priorität: 09.08.2005 DE 102005037553
(43) Veröffentlichungstag der Anmeldung: 07.05.2008
(73) Patentinhaber: ROBERT BOSCH GMBH, 70442 Stuttgart (DE)
(72) Erfinder: FRESE, Thomas, 58706 Menden (DE); AUMAYER, Richard, 31199 Diekholzen (DE)
(86) Internationale Anmeldenummer: PCT/EP2006/063086
(87) Internationale Veröffentlichungsnummer: WO 2007/017300

(56) Entgegenhaltungen:
- DE-A1- 10 005 581
- DE-A1- 10 128 758
- US-A- 5 815 824
- US-A- 6 005 494
- US-A1- 2003 009 269

## Beschreibung

### Stand der Technik

Die Erfindung betrifft ein Verfahren zur Ansteuerung eines Hybridfahrzeugs nach dem Oberbegriff des Anspruchs 1 und ein Hybridfahrzeug nach dem Oberbegriff des Anspruchs 8.

Als Hybridfahrzeuge werden solche Fahrzeuge bezeichnet, die verschiedene Energiequellen zum Betrieb des Fahrzeugs nutzen. Bekannt sind Hybridfahrzeuge mit einer Verbrennungskraftmaschine und mindestens einem Elektromotor. Die elektrische Energie des Elektromotors kommt aus einem Energiespeicher, z.B. einer oder mehrerer Batterien und/oder Superkondensatoren ("Supercaps"). Außerdem besitzt das Fahrzeug die Möglichkeit, Bremsenergie in Form elektrischer Energie zurück zu gewinnen (Rekuperation). Eine Betriebsstrategie soll dafür sorgen, die beiden Antriebsmaschinen im jeweiligen Optimum zu betreiben und anfallende Bremsenergie möglichst verlustfrei zurückzuspeichern. Zweck der Hybridisierung ist es, den Verbrauch von Primärkraftstoffen gegenüber konventionellen, nur von Verbrennungskraftmaschinen betriebenen Fahrzeugen zu reduzieren.

Aus der DE 101 28 758 A1 ist ein Verfahren zur Ansteuerung eines Hybridfahrzeugs bekannt, bei dem der Antrieb nach Vorgabe einer Betriebssteuerung mittels einer Verbrennungskraftmaschine und/oder eines Elektromotors erfolgt, wobei der Anteil des elektromotorischen Antriebs in Abhängigkeit von die Fahrtstrecke betreffenden, der Betriebssteuerung mitgeteilten Daten unter Berücksichtigung des Ladezustands eines Energiespeichers für elektrische Energie gesteuert wird, wobei die Daten Höheninformationen umfassen, die zur Steuerung des Anteils des elektromotorischen Antriebs zugrunde gelegt werden, wobei ein in der Betriebssteuerung vorgegebener oder vorgebbarer Mindestladezustand des Energiespeichers, bei dem die notwendige Fahrzeuggrundfunktionen noch gewährleistet sind, nicht unterschritten wird. Die Betriebssteuerung erhält die Höheninformationen aus Daten eines Navigationssystems oder eines anderen vorausschauenden Systems.

Aus der US 5815824 ist ein Navigationssystem für Elektrofahrzeuge, insbesondere Hybridfahrzeuge, bekannt, welches den Ladezustand einer Batterie steuert, indem spezielle Funktionen des Navigationssystems ausgenutzt werden. Dabei wird vom Fahrer ein Ziel vorgegeben. Basierend auf der aktuellen- und der Zielposition sowie geplanter Lade-Punkte und Informationen bzgl. der Strecke wird eine Fahrtroute ausgewählt. Auf Grundlage der Entfernung zum Zielort sowie verbleibender Batteriekapazität wird entschieden, ob das Fahrzeug den Zielort erreichen kann.

### Vorteile der Erfindung

Es wird ein Verfahren gemäß Anspruch 1 vorgeschlagen, bei dem eine optimierte Betriebsstrategie bestimmt wird unter Vorgabe eines geographischen Fahrtziels und eines Zielparameters der Betriebsstrategie, wobei bei Verfügbarkeit alternativer Fahrtrouten eine Auswahl der Fahrtroute unter Berücksichtigung der optimierten Betriebsstrategie getroffen wird. Vorteilhaft kann die Betriebsstrategie durch Anwendung prädikativer Daten aus der Fahrtroute optimiert werden. Als Zielparameter kann z.B. ein gewünschter Ladezustand des Energiespeichers des Hybridfahrzeugs vorgegeben werden. In Kenntnis insbesondere des Höhenprofils und weiterer Informationen über alternative Fahrtrouten kann bereits die Fahrtroutenauswahl unter Berücksichtigung der Betriebsparameter des Hybridfahrzeugs erfolgen. Werden diese Informationen zur Optimierung der Betriebsstrategie verwendet, so kann in einem ersten Teil der Fahrtroute vermehrt diejenige Antriebsmaschine, deren Energie im Energiespeicher gespeichert wird, eingesetzt werden, wenn im zweiten Teil der Fahrtroute Gefällbereiche mit erhöhtem Bremsbedarf erwartet werden können. Durch die verstärkte Entleerung des Energiespeichers im ersten Teil wird das System in die Lage versetzt, im zweiten Teil rückgespeiste Energie leichter und ggf. mit höherem Wirkungsgrad aufnehmen zu können. Vorzugsweise ist als erste Antriebsmaschine eine Verbrennungskraftmaschine und als zweite Antriebsmaschine ein Elektromotor vorgesehen. Es sind jedoch auch andere Arten von Antriebsmaschinen möglich. Als Hybridfahrzeug wird ein Fahrzeug bezeichnet, bei dem aus zwei Antriebsquellen, insbesondere verschiedenen Antriebsmaschinen, Antriebsenergie erzeugt wird, welche rekuperiert, also zurückgewonnen werden kann, .z.B. beim Bremsen. Die rekuperierte Energie kann sofort genutzt und/oder für eine spätere Nutzung gespeichert werden. Die rekuperierte Energie kann für den Fahrantrieb und/oder für andere Verbraucher genutzt werden. Als Energiespeicher ist ein elektrischer Speicher zweckmäßig, wenn eine der Antriebsmaschinen ein Elektromotor ist. Es sind jedoch auch andere Speicher möglich. Als Antriebsmaschinen können Verbrennungskraftmaschinen und Elektromotoren eingesetzt werden. Es sind auch andere Antriebsmaschinen denkbar.

Es ist günstig, wenn zur Auswahl einer geeigneten Fahrtroute Daten eines Navigationssystems hinsichtlich Höhendifferenzen und/oder Straßenklassen und/oder Entfernung und/oder voraussichtlicher Fahrtzeit herangezogen werden. Navigationssysteme können verschiedene Datenquellen zur Optimierung der Fahrtroute bei gegebenem Fahrtziel nutzen. Karten auf Datenspeichern können neben Straßenverläufen eine Vielzahl von weiteren Informationen enthalten, wie z.B. Informationen über Steigung und Gefälle, Informationen über voraussichtliche Fahrtgeschwindigkeiten zur Bestimmung einer Drehzahlverteilung am Generator durch Kenntnis der verfügbaren Straßenarten (Stadt, Landstraße, Autobahn), Informationen über voraussichtliche Stoppphasen, z.B. in Innenstädten, dies auch tageszeitlich differenziert unter Berücksichtigung des Verkehrsaufkommens z.B. in der Rushhour. Weitere Datenquellen sind z.B. Verkehrsfunk oder Sendebaken mit Informationen über Staumeldungen bzw. zähfließenden Verkehr, oder eine Fahrzeugkommunikation mit Informationen aus vorausfahrenden Fahrzeugen.

Zweckmäßigerweise kann zur Auswahl einer geeigneten Fahrtroute aktuelle Informationen über die alternativen Fahrtrouten hinsichtlich einer aktuellen und/oder voraussichtlichen Verkehrsbelastung der jeweiligen Fahrtroute und/oder der Tageszeit und/oder tageszeitlich zu erwartender Start/Stopp-Phasen des Hybridfahrzeugs herangezogen werden.

Günstigerweise kann als Auswahlkriterium der Fahrtrouten wenigstens ein Parameter der Gruppe Kraftstoffbilanz, Endladezustand des Energiespeichers, Gesamtfahrzeit herangezogen werden.

Vorteilhaft kann die Auswahl dynamisiert werden, wenn ein Zielparameter voraussichtlich nicht erreicht werden kann, indem die ausgewählte Fahrtroute unter Beibehaltung der Betriebsstrategie geändert wird.

Alternativ kann die Auswahl dynamisiert werden, wenn ein Zielparameter voraussichtlich nicht erreicht werden kann, indem die ausgewählte Fahrtroute beibehalten wird unter Änderung der Betriebsstrategie.

Es wird auch ein Hybridfahrzeug gemäβ Anspruch 8 vorgeschlagen, bei dem Mittel vorgesehen sind, um eine optimierte Betriebsstrategie zu bestimmen unter Vorgabe eines geographischen Fahrtziels und eines Zielparameters der Betriebsstrategie, wobei bei Verfügbarkeit alternativer Fahrtrouten die Fahrtroute unter Berücksichtigung der optimierten Betriebsstrategie auswählbar ist. Das Hybridfahrzeug weist eine erste Antriebsmaschine, insbesondere eine Verbrennungskraftmaschine und eine zweite Antriebsmaschine, insbesondere einen Elektromotor, auf. Energie, die z.B. in bestimmten Betriebsphasen gewonnen wird, ist in einem Energiespeicher speicherbar. Der Energiespeicher kann z. B. eine Batterie zur Speicherung elektrischer Energie eines Elektromotors sein, der bei einem Bremsvorgang oder bei einer Bergabfahrt generatorisch betreibbar ist und den Energiespeicher auflädt. Dabei wird Antriebsenergie teilweise zurückgewonnen, d.h. rekuperiert. Es können auch andere Energiespeicher, z.B. Superkondensatoren, Schwungräder und dergl., vorgesehen sein. Rekuperierte Energie kann sofort genutzt oder zur späteren Nutzung gespeichert werden. Die rekuperierte Energie kann für den Fahrantrieb und/oder für andere Verbraucher genutzt werden. Neben Verbrennungskraftmaschinen und Elektromotoren sind auch andere Antriebe, wie auch Kombinationen mit anderen Antrieben möglich.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von einem in einer Zeichnung dargestellten Ausführungsbeispiel der Erfindung.

Im Folgenden zeigen
- Figur 1: beispielhaft ein Schema eines bevorzugten Parallel-Hybridfahrzeugs;
- Figur 2: einen bevorzugten Ablauf des erfindungsgemäßen Verfahrens.

### Beschreibung des Ausführungsbeispiels

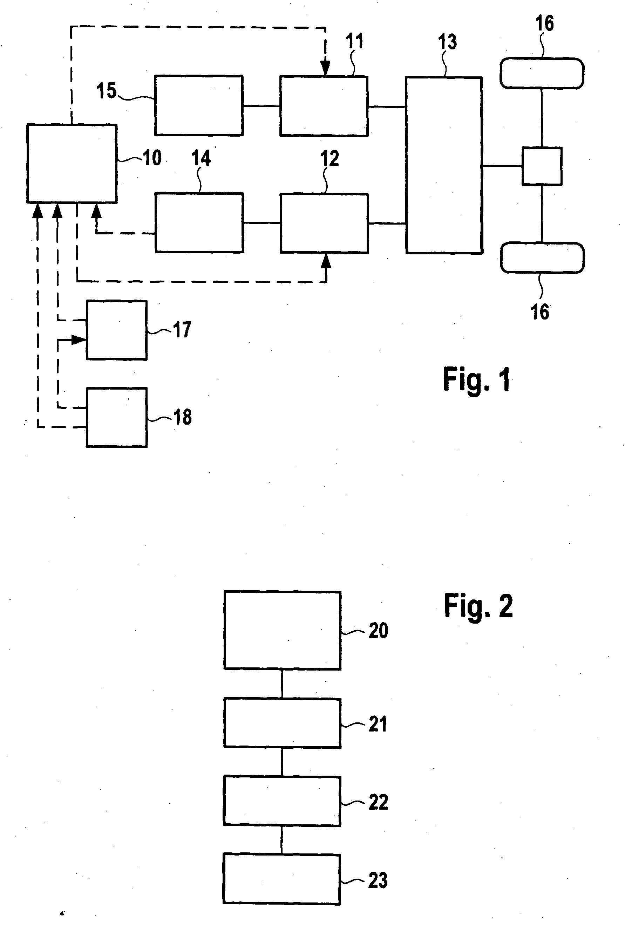

Fig. 1 zeigt ein Schema eines bevorzugten Parallel-Hybridfahrzeugs mit einer ersten Antriebsmaschine 11, einer Verbrennungskraftmaschine und einer zweiten Antriebsmaschine 12, einem Elektromotor, bei dem typischerweise eine Momentenaddition von der Verbrennungskraftmaschine 11 und des Elektromotors 12 erfolgt. Die Erfindung kann selbstverständlich auch auf andere Typen von Hybridfahrzeugen wie ein serielles Hybridfahrzeug, ein Leistungsverzweigungs-Hybridfahrzeug oder auch Mischhybride angewendet werden.

Die Verbrennungskraftmaschine 11 wird mit Kraftstoff aus einem Kraftstofftank 15 versorgt, der Elektromotor 12 mit Leistung aus einem Energiespeicher 14, z.B. einer Batterie. Verbrennungskraftmaschine 11 und Elektromotor 12 beaufschlagen Antriebsräder 16 über ein Getriebe 13 mit Antriebsleistung.

Eine Betriebssteuerung 10 steuert die Verbrennungskraftmaschine 11 und den Elektromotor 12 an, wobei der Anteil des elektromotorischen Antriebs in Abhängigkeit von eine Fahrtstrecke des Hybridfahrzeugs betreffenden, der Betriebssteuerung 10 mitgeteilten Daten unter Berücksichtigung eines Ladezustands L des Energiespeichers 14 gesteuert wird.

Die Daten erhält die Betriebssteuerung 10 von einem Navigationssystem 17, welches die notwendigen Daten auf einem Speichermedium bereithält. Diese sind insbesondere Informationen über Stra-βenklassen, Höhenprofile, Entfernungen. Zusätzliche Daten können über einen Empfänger 18 erhalten werden, der diese Daten dem Navigationssystem 17 und/oder der Betriebssteuerung 10 zur Verfügung stellt, z.B. Informationen über die aktuelle Verkehrslage über Verkehrsfunk, GPS (Global Pointing System), Sendebaken und/oder Fahrzeugkommunikation mit vorausfahrenden Fahrzeugen.

Fig. 2 zeigt einen bevorzugten Ablauf des erfindungsgemäßen Verfahrens.

In einem ersten Funktionsblock 20 wird das Fahrtziel eingegeben unter Kenntnis des Standorts. Es können zusätzliche Ziele und/oder Nutzen, die der Anwender realisieren möchte, eingegeben werden, z.B. einen vollen Energiespeicher am Zielort, um eine Standklimatisierung vor einem neuen Fahrtantritt zu ermöglichen, eine gewünschte Dauer der Fahrt und dergleichen.

In einem zweiten Funktionsblock 21 erfolgt eine Fahrtroutenberechnung mit alternativen Fahrtrouten. Dabei können z.B. die kürzeste Strecke, die schnellste Strecke, eine Strecke mit oder ohne Autobahn, mit oder ohne Ausschluss bestimmter Straßenklassen, mit oder ohne innerstädtische Bereiche und dergleichen berücksichtigt werden.

In einem dritten Funktionsblock 22 erfolgt die Auswahl der Fahrtroute. Ein Ausgangsladezustand des Energiespeichers 14, eine voraussichtliche Drehzahlverteilung entsprechend den Straßenklassen, eine voraussichtliche Anzahl von Start/Stopp-Ereignissen unter Berücksichtigung der Tageszeit, ein Höhenprofil und dergleichen können zugrunde gelegt werden. Bevorzugte Auswahlkriterien für die Fahrtroute bilden eine zu erwartende Kraftstoffbilanz, ein EndLadezustand des Energiespeichers, eine Gesamtfahrzeit. Ferner wird angestrebt, die vom Anwender vorgegebenen Ziele und/oder Nutzen möglichst zu realisieren.

In einem vierten Funktionsblock 23 erfolgt eine Information des Anwenders über die ausgewählte Fahrtroute, und die Navigation wird dem entsprechend ausgeführt. Dabei kann ggf. eine zusätzliche Information über den Kraftstoffverbrauch bzw. eine Möglichkeit für den Anwender, unter Inkaufnahme einer erhöhten Fahrzeit eine verbrauchsgünstigere Fahrtroute zu wählen, angeboten werden.

Eine Dynamisierung bzw. Anpassung der Fahrtroute kann erfolgen, wenn eingestellte Ziele oder Nutzen des Anwenders voraussichtlich nicht sichergestellt werden kann. Dabei kann die optimierte Betriebsstrategie beibehalten werden. Alternativ kann die Fahrtroute beibehalten werden und die Betriebsstrategie geändert werden. Die kann der Anwender wahlweise vorgeben.

## Patentansprüche

1. Verfahren zur Ansteuerung eines Hybridfahrzeugs mit wenigstens zwei Antriebsmaschinen (11,12), bei dem der Antrieb nach Vorgabe einer Betriebssteuerung (10) mittels der ersten Antriebmaschine (11), insbesondere einer Verbrennungskraftmaschine, und/oder der zweiten Antriebsmaschine (12), insbesondere eines Elektromotors, erfolgt,
• wobei der Anteil des Antriebs der zweiten Antriebsmaschine (12) in Abhängigkeit von die Fahrtstrecke betreffenden, der Betriebssteuerung (10) mitgeteilten Daten unter Berücksichtigung eines Ladezustands (L) eines Energiespeichers (14) gesteuert wird
• und eine optimierte Betriebsstrategie fur die beiden Antriebsmachinen bestimmt wird unter Vorgabe
○ eines geographischen Fahrtziels
• und die optimierte Betriebsstrategie auch bestimmt wird unter Vorgabe
○ eines Zielparameters der Betriebsstrategie, **dadurch gekennzeichnet, dass**
• bei Verfügbarkeit alternativer Fahrtrouten eine Auswahl der Fahrtroute getroffen wird,
• wobei die Auswahl der Fahrtroute unter Berücksichtigung der optimierte Betriebsstrategie getroffen wird.

2. Verfahren nach Anspruch 1, **dadurch gekennzeichnet, dass** die Auswahl der Fahrtroute unter Berücksichtigung der Betriebsparameter des Hybridfahrzeugs erfolgt.

3. Verfahren nach Anspruch 1 oder 2, **dadurch gekennzeichnet, dass** zur Auswahl einer geeigneten Fahrtroute Daten eines Navigationssystems (17) hinsichtlich Höhendifferenzen und/oder Straßenklassen und/oder Entfernung und/oder voraussichtlicher Fahrtzeit herangezogen werden.

4. Verfahren nach einem der vorhergehenden Ansprüche, **dadurch gekennzeichnet, dass** zur Auswahl einer geeigneten Fahrtroute aktuelle Informationen über die alternativen Fahrtrouten hinsichtlich einer aktuellen und/oder voraussichtlichen Verkehrsbelastung der jeweiligen Fahrtroute und/oder der Tageszeit und/oder tageszeitlich zu erwartender Start/StoppPhasen des Hybridfahrzeugs herangezogen werden.

5. Verfahren nach einem der vorhergehenden Ansprüche, **dadurch gekennzeichnet, dass** als Auswahlkriterium der Fahrtrouten wenigstens ein Parameter der Gruppe Kraftstoffbilanz, Endladezustand des Energiespeichers (14), Gesamtfahrzeit herangezogen wird.

6. Verfahren nach einem der vorhergehenden Ansprüche, **dadurch gekennzeichnet, dass** die Auswahl dynamisiert wird, wenn ein Zielparameter voraussichtlich nicht erreicht werden kann, indem die ausgewählte Fahrtroute unter Beibehaltung der Betriebsstrategie geändert wird.

7. Verfahren nach einem der vorhergehenden Ansprüche, **dadurch gekennzeichnet, dass** die Auswahl dynamisiert wird, wenn ein Zielparameter voraussichtlich nicht erreicht werden kann, indem die ausgewählte Fahrtroute beibehalten wird unter Änderung der Betriebsstrategie.

8. Hybridfahrzeug mit einem nach Vorgabe einer Betriebssteuerung (10) mittels einer ersten Antriebsmaschine (11), insbesondere einer • Verbrennungskraftmaschine, und/oder einer zweiten Antriebsmaschine (12), insbesondere eines Elektromotors, betreibbaren Antrieb,
• wobei der Anteil des Antriebs der zweiten Antriebsmaschine (12) in Abhängigkeit von die Fahrtstrecke betreffenden, der Betriebssteuerung (10) mitgeteilten Daten unter Berücksichtigung eines Ladezustands (L) eines Energiespeichers (14) steuerbar ist,
• und Mittel vorgesehen sind, um eine optimierte Betriebsstrategie zu bestimmen unter Vorgabe
○ eines geographischen Fahrtziels und
• Mittel vorgesehen sind, um die optimierte Betriebsstrategie auch zu bestimmen unter Vorgabe
○ eines Zielparameters der Betriebsstrategie, **dadurch gekennzeichnet, dass**
• bei Verfügbarkeit alternativer Fahrtrouten die Fahrtroute auswählbar ist,
• wobei die Fahrtroute unter Berücksichtigung der optimierten Betriebsstrategie auswählbar ist.

9. Hybridfahrzeug nach Anspruch 8, **dadurch gekennzeichnet, dass** in einzelnen Betriebsphasen zurückgewonnene Antriebsenergie Verbrauchern direkt oder durch Zwischenspeichern in dem Energiespeicher (14) zuführbar ist.

## Claims

1. Method for actuating a hybrid vehicle having at least two drive machines (11, 12), in which the drive is provided according to the predefinition of an operations controller (10) by means of the first drive machine (11), in particular an internal combustion engine, and/or by means of the second drive machine (12), in particular an electric motor,
• wherein the proportion of the drive of the second drive machine (12) is controlled as a function of data which relates to the route and is communicated to the operations controller (10), taking into account a state of charge (L) of an energy store (14),
• and an optimized operating strategy for the two drive machines is determined with the predefinition
o of a geographic destination
• and the optimized operating strategy is also determined with the predefinition
o of a target parameter of the operating strategy,
**characterized in that**
• when alternative routes are available, selection of the route takes place,
• wherein the selection of the route is carried out taking into account the optimized operating strategy.

2. Method according to Claim 1, **characterized in that** the selection of the route is carried out taking into account the operating parameters of the hybrid vehicle.

3. Method according to Claim 1 or 2, **characterized in that** data of a navigation system (17) relating to altitude differences and/or road classes and/or distance and/or anticipated travel time are used for the selection of a suitable route.

4. Method according to one of the preceding claims, **characterized in that** current information about the alternative routes relating to a current and/or anticipated traffic intensity of the respective route and/or the time of day and/or start/stop phases of the hybrid vehicle which are to be expected at the time of day are used for the selection of a suitable route.

5. Method according to one of the preceding claims, **characterized in that** at least one parameter of the group comprising the fuel balance, discharge state of the energy store (14) and total travel time is used as a selection criterion for the routes.

6. Method according to one of the preceding claims, **characterized in that** the selection is made more dynamic if it is expected that a target parameter cannot be reached, by changing the selected route by maintaining the operating strategy.

7. Method according to one of the preceding claims, **characterized in that** the selection is made more dynamic if it is expected that a target parameter cannot be reached, by maintaining the selected route while changing the operating strategy.

8. Hybrid vehicle having a drive which can be operated according to the predefinition of an operations controller (10) by means of a first drive machine (11), in particular an internal combustion engine, and/or by means of a second drive machine (12), in particular an electric motor,
• wherein the proportion of the drive of the second working machine (12) can be controlled as a function of data which relates to the route and is communicated to the operations controller (10), taking into account a state of charge (L) of an energy store (14),
• and means are provided for determining an optimized operating strategy by predefining
o a geographic destination and
• means are provided for also determining the optimized operating strategy by predefining
o a target parameter of the operating strategy,
**characterized in that**
• when alternative routes are available, the route can be selected,
• wherein the route can be selected by taking into account the optimized operating strategy.

9. Hybrid vehicle according to Claim 8, **characterized in that** drive energy which is recovered in individual operating phases can be fed to consumers directly or by buffering in the energy store (14).

## Revendications

1. Procédé de commande d'un véhicule hybride qui présente au moins deux moteurs d'entraînement (11, 12), dans lequel l'entraînement s'effectue selon une commande de fonctionnement (10) au moyen du premier moteur d'entraînement (11), en particulier un moteur à combustion interne, et/ou du deuxième moteur d'entraînement (12), en particulier un moteur électrique,
la fraction de l'entraînement apportée par le deuxième moteur d'entraînement (12) étant commandée en fonction de données concernant le chemin parcouru transmises à la commande de fonctionnement (10) en tenant compte d'un état de charge (L) d'un accumulateur d'énergie (14),
une stratégie optimisée de fonctionnement des deux moteurs d'entraînement étant déterminée selon la destination géographique du déplacement et une stratégie de fonctionnement optimisée étant également déterminée selon un paramètre d'objectif de la stratégie de fonctionnement,
**caractérisé en ce que**
un itinéraire de déplacement est sélectionné lorsque des itinéraires alternatifs de déplacement sont disponibles et
**en ce que** la sélection de l'itinéraire de déplacement est effectuée en tenant compte de la stratégie de fonctionnement optimisée.

2. Procédé selon la revendication 1, **caractérisé en ce que** la sélection de l'itinéraire de déplacement s'effectue en tenant compte des paramètres de fonctionnement du véhicule hybride.

3. Procédé selon les revendications 1 ou 2, **caractérisé en ce que** la sélection d'un itinéraire de déplacement approprié utilise des données d'un système de navigation (17) concernant des différences d'altitude, des classes de chaussée, de la distance et/ou de la durée prévisible du déplacement.

4. Procédé selon l'une des revendications précédentes, **caractérisé en ce que** la sélection d'un itinéraire de déplacement approprié utilise des informations actualisées concernant les itinéraires alternatifs de déplacement et indiquant l'intensité actuelle et/ou prévisible du trafic sur chaque itinéraire de déplacement, l'heure du jour et/ou les phases prévisibles attendues de démarrage et d'arrêt du véhicule hybride.

5. Procédé selon l'une des revendications précédentes, **caractérisé en ce qu'**au moins un paramètre de l'ensemble constitué du bilan carburant, de l'état de décharge de l'accumulateur d'énergie (14) et de la durée totale du déplacement est utilisé comme critère de sélection des itinéraires de déplacement.

6. Procédé selon l'une des revendications précédentes, **caractérisé en ce que** s'il s'avère prévisible qu'un paramètre d'objectif ne peut être atteint, la sélection est dynamisée en modifiant l'itinéraire de déplacement sélectionné tout en respectant la stratégie de fonctionnement.

7. Procédé selon l'une des revendications précédentes, **caractérisé en ce que** s'il s'avère prévisible qu'un paramètre d'objectif ne peut être atteint, la sélection est dynamisée en maintenant l'itinéraire de déplacement sélectionné et en modifiant la stratégie de fonctionnement.

8. Véhicule hybride présentant un entraînement qui peut fonctionner selon une commande de fonctionnement (10) au moyen d'un premier moteur d'entraînement (11), en particulier un moteur à combustion interne, et/ou d'un deuxième moteur d'entraînement (12), en particulier un moteur électrique,
la fraction de l'entraînement apportée par le deuxième moteur d'entraînement (12) pouvant être commandée en fonction de données concernant le chemin parcouru transmises à la commande de fonctionnement (10) en tenant compte d'un état de charge (L) d'un accumulateur d'énergie (14),
des moyens étant prévus pour déterminer une stratégie optimisée de fonctionnement selon une destination géographique du déplacement et des moyens étant prévus pour déterminer également la stratégie optimisée de fonctionnement selon un paramètre d'objectif de la stratégie de fonctionnement, **caractérisé en ce que**
lorsque des itinéraires alternatifs de déplacement sont disponibles, l'itinéraire de déplacement peut être sélectionné et **en ce que** l'itinéraire de déplacement peut être sélectionné en tenant compte de la stratégie optimisée de fonctionnement.

9. Véhicule hybride selon la revendication 8, **caractérisé en ce que** l'énergie d'entraînement récupérée dans certaines phases de fonctionnement peut être apportée aux consommateurs directement ou après accumulation intermédiaire dans l'accumulateur d'énergie (14).
